# EUROPEAN PATENT APPLICATION

(11) **EP 2 407 304 A1**
(43) Date of publication of application: **18.01.2012**
(21) Application number: 11005532.4
(22) Date of filing: 07.07.2011
(51) Int. Cl.: B32B 27/04, B32B 27/12, B29C 51/14, B32B 37/15

(54) **Production method for a panel**

(30) Priority: 13.07.2010 BE 201000430
(71) Applicant: Mondi Belcoat, Naamloze Vennootschap, 2570 Duffel (BE)
(72) Inventor: Dictus, Josephus Theodorus Petrus, 2800 Mechelen (BE); Miler, Laurence, Shunyi District Beijing 101302 (CN)
(74) Representative: Donné, Eddy

(57) **Abstract**

A production method for the production of a panel with a protective layer wherein the panel is produced by lamination of a protective layer on a layer of core material with insulating vacancies and this on one or both sides of the core material by means of a bonding layer between the protective layer and the core material.

## Description

The present invention relates to a production method for the production of a panel with a protective layer.

More specifically, the invention is intended as a production method for plastic panels, suitable for use as components in automobiles.

The demand to reduce the weight in automobiles has recently gained importance in order to reduce the fuel consumption of automobiles.

Thus the roof lining in automobile interiors is predominantly made from fibre-reinforced thermoplastic resins, in which inorganic fibres, such as glass fibres, are fixed in a resin such as polyethylene or polypropylene, as described in EP 1.369.223, wherein a compression mould for plastic is used with which a fibre reinforced layer is expanded and is fixed to a protective layer.

The formed product must on one hand have a high stiffness but on the other hand it must show a good adhesion with the protective layer.

In order to obtain a high stiffness one should keep the thickness of the expanding polymer high, which can be achieved by reducing the pressure on the mould, but in doing so the adhesion to the protective layer diminishes, and may even become unsatisfactory.

The requirements of stiffness and of a good adhesion to the protective layer are opposed to one another and it is difficult to obtain an expanded layer with a protective layer that satisfies both requirements.

This composition enables the weight to be greatly reduced while maintaining the mechanical strength and dimensional stability.

US 2008/0067002 describes floor plates for protecting the underside of an automobile that are manufactured from a porous core layer with embedded reinforcement fibres, more specifically glass fibres, and with at least one top layer on each side. These floor plates have acoustic absorbing properties.

The resulting components typically have a thickness of 1.5 to 2.5 mm and a basic weight of 2 kg/m^{z}.

Newer production methods have led to even lower weights. In these, a glass fibre reinforced polymer core, such as polypropylene, has a polypropylene top layer along both sides. The polymer core has the property of expanding under the influence of heat, such that the whole set has a thickness of 10 mm. In this way the weight can be reduced to below 1.5 kg/m² without compromising the rigidity of the material.

A disadvantage of this last composition is that structures to strengthen it or provide additional functions are difficult to apply.

Another disadvantage is that the weight is still higher than desired for the construction of automobiles.

The purpose of the present invention is to provide a solution to the aforementioned disadvantages and other disadvantages.

To this end the invention concerns a production method for the production of a panel with a protective layer, wherein the panel is produced by lamination of a protective layer on a core layer with insulating cavities, and this on one or both sides by means of a bonding layer between the protective layer and the core material.

The protective layer itself is produced in one production stage by coextrusion of a non expanding consolidated fibre-reinforced polymer layer , with on both sides a polyethylene or polypropylene layer, that is subsequently covered on one or both sides with a cover layer, that together with a bonding layer is coextruded on the polyethylene or polypropylene layer.

An advantage of this production method is that this method allows to satisfy both the high requirements concerning stiffness and concerning the good adhesion of the protective layer.

The use of the coextrusion and lamination method allows avoidance of a plastic compression mould production method. Moreover, on the cover layer of the protective layer an additional bonding layer can be laminated, with which an additional layer can be applied.

This additional layer can be used as an additional protection against external influences such as chipping, splashing water and mechanical damage, UV-radiation or noise.

Preferably for the cover layer a polymer is chosen from the groups of polyamides, polyterephthalates, polyvinyl alcohols, or polyvinyl chlorides, with a bonding layer between the two polymer layers.

Consolidated here means that the fibre-reinforced layer is a solid structure and is not a foam layer or does not contain insulating cavities.

Preferably the thickness of the consolidated fibre-reinforced polymer substrate is no more than 3 mm and the weight of the laminated protective layer is no more than 500 g/m², which allows the core material to which it is bonded to be made lighter, so that the weight of the core material can be reduced from 1400 g/m2 to 1000 g/m2. This can be done because the protective layer itself makes an important contribution to the rigidity of the panel.

The consolidated fibre-reinforced coextruded polymer substrate layer contains fibres that are chosen from the groups of glass fibres, mineral fibres or vegetable fibres. The fibres are preferably primarily oriented in the X and Y directions, parallel to the surface of the consolidated polymer substrate.

The polymer in the consolidated fibre-reinforced substrate preferably consists of polypropylene or polyethylene.

The core material for example consists of a synthetic foam such as a polyurethane foam or a bicomponent polyester/polypropylene material, or a honeycomb structure of synthetic materials or natural products, or a thermally expanding fibre-reinforced polymer layer, such that the core material always contains insulating cavities.

The core material can also consist of a natural product such as a cellulose layer or honeycomb structure made of paper or cardboard, such that the core material always contains insulating cavities.

An advantage of this protective layer is that it forms a waterproof layer and an acoustically insulating layer, while at the same time the weight per square metre of the total finished panel remains limited.

The protective layer can also contain additives that are fire resistant and/or UV absorbent.

Preferably the bonding layer consists of a modified polyolefin, with functional groups, such as more specifically a glycidyl-methacrylate-containing polymer. This reactive polymer enables a good chemical bond to be obtained between the inert polypropylene or polyethylene layer on one side and the top polyamide layer on the other, for example.

Preferably the fibres in the consolidated polymer substrate are chosen from the groups of glass fibres, mineral fibres or vegetable fibres, and these fibres are oriented in the X and Y directions, parallel to the surface of the substrate.

The polymer in the consolidated fibre-reinforced polymer substrate (2) preferably consists of polypropylene or polyethylene.

An advantage of such fibres is that they ensure good dimensional stability, especially if the fibres are completely covered with the embedding polymer.

An advantage of this form of construction is that the panel with the protective layer can be very easily formed in the desired shape thermally, but nevertheless retains its form after cooling.

The additional protective layer provides protection against chipping, water splashes and external influences such as noise, which for automobile components, such as a floor plate, are desirable properties.

An additional advantage is that the protective layer for the panel has good gas barrier properties and that the outer finish is suitable for applying coatings, such as car paints.

An advantage of the bonding layer between the top layer and the consolidated fibre-reinforced polymer substrate is that they can be fixed, together with these two layers, by coextrusion in one production stage, whereby optionally a second bonding layer can be affixed to the other side of the top layer.

A further advantage of the first bonding layer is that it brings about a strong bond between the top layer and the shape-determining fibre-reinforced consolidated substrate so that the top layer cannot detach.

An advantage of the second bonding layer is that it allows an additional protective layer to be bonded to the top layer, for example a non-woven fibre material.

Preferably the production process for manufacturing a protective layer according to the invention consists of covering both sides of a non-woven fibre layer with an extruded polyethylene or polypropylene layer with the formation of a consolidated fibre-reinforced substrate, and then covering it with a top layer that is bonded to the substrate by means of a bonding layer.

An advantage of this production method is that the entire protective layer can be manufactured in one production stage through a production process, which substantially reduces the production cost.

Optionally a second bonding layer can be affixed to the top layer of the protective layer, on which a non-woven layer is laid consisting of synthetic or natural materials.

This non-woven layer can consist of polyester, mixtures of polyester and viscose, polypropylene or mixtures of polypropylene, polyester and viscose, or even cellulose fibres.

An advantage of such a non-woven layer is that it provides additional protection to the top layer, by absorbing external influences, and that it provides a certain surface texture.

The production process can be followed by a thermal forming stage for a component that is made from a core material with a protective layer according to the invention, whereby the deformability is improved by preventing cracks in the protective layer.

With the intention of better showing the characteristics of the invention, a preferred embodiment is described hereinafter by way of an example, without any limiting nature, of a production of a panel with a protective layer on a core material, with reference to the accompanying drawings, wherein:
figure 1 schematically shows a cross-section of a protective layer for a panel according to the invention;
figure 2 shows the protective layer of figure 1 bonded to a core material layer of a panel;
figure 3 shows figure 2 with an additional layer on the top layer;
figure 4 shows the production process for the protective layer with a single production stage;
figure 5 shows a component for an automobile as an end product.

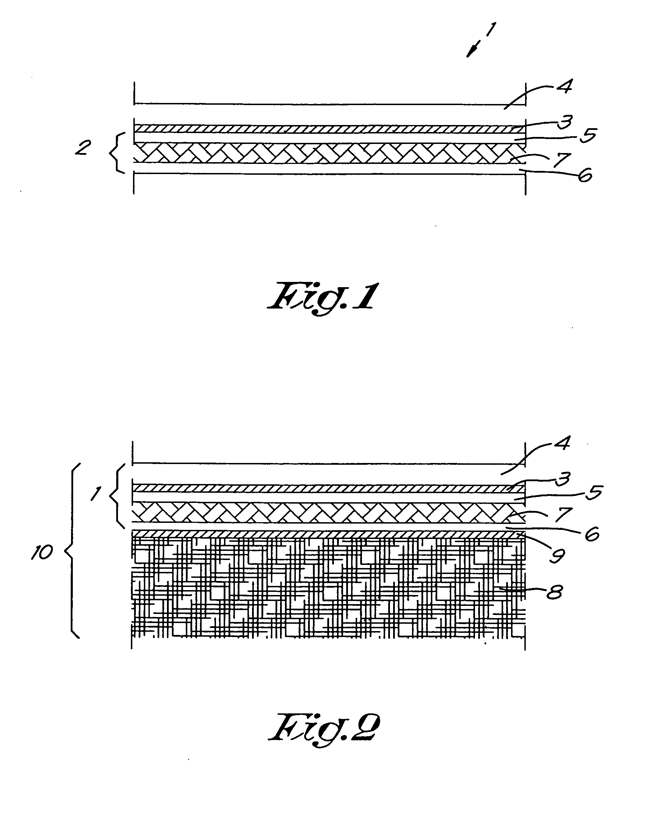

Figure 1 presents a cross-section through the protective layer 1 for a panel, in which a consolidated fibre-reinforced polymer substrate 2 has a first bonding layer 3 and a polymer cover layer 4. The polymer substrate 2 consists of two polypropylene or polyethylene layers 5,6 between which a layer of fibres 7 is held.

As shown in figure 2, the protective layer 1 is bonded to a layer of core material 8 by means of a second bonding layer 9, whereby the core material layer 8 forms part of a panel 10.

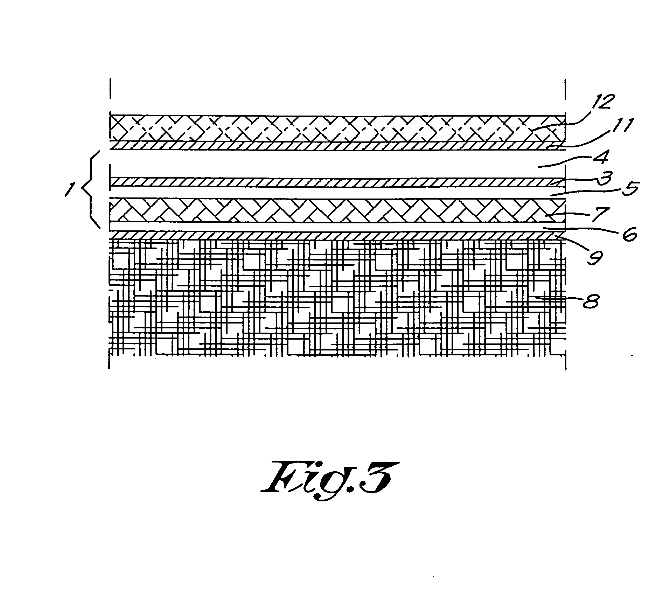

Figure 3 shows the cross-section of a variant embodiment of the protective layer, whereby also on the other side a bonding layer 11 is affixed to the top layer 4, , whereby an additional protective layer 12 is bonded to the cover layer 4, for example a non-woven fibre layer with the desired properties such as a certain texture.

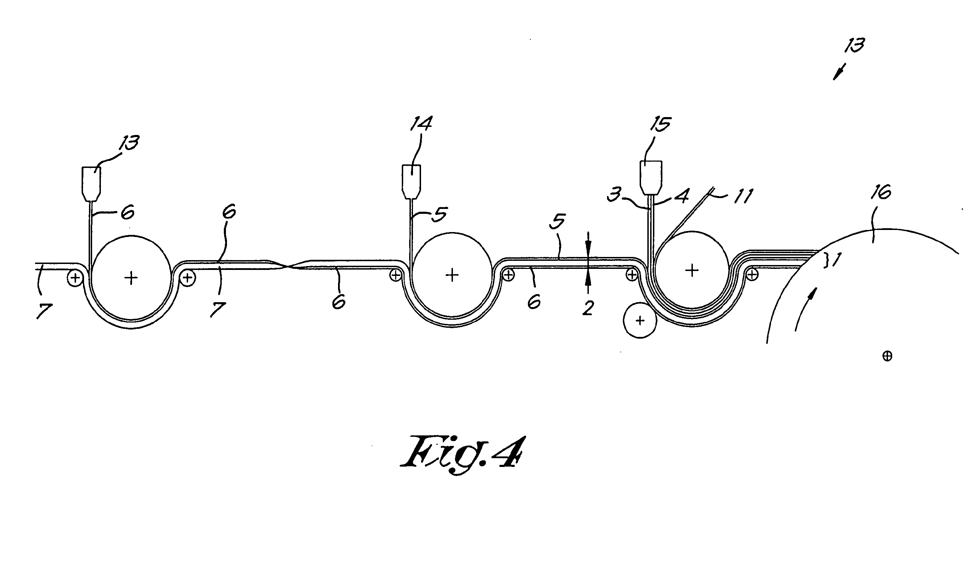

The protective layer 1 is manufactured in one pass through a production process 13, as presented in figure 4.

The non-woven glass fibre layer 7 has a polyethylene layer 6 on one side, after which the web is reversed and a polyethylene layer 5 is also applied to the other side by means of the extrusion machines 13 and 14.

On this consolidated fibre-reinforced polymer substrate 2 a bonding layer 3 and a top layer 4 is extruded by the extrusion machine 15, after which the protective layer 1 is wound up on a collecting roller 16.

As an option, in the last extrusion stage an additional bonding layer 11 can also be laminated onto the protective layer 1, such that an additional layer can be affixed to the protective layer 1, like a non-woven fibre layer or a layer with a certain texture.

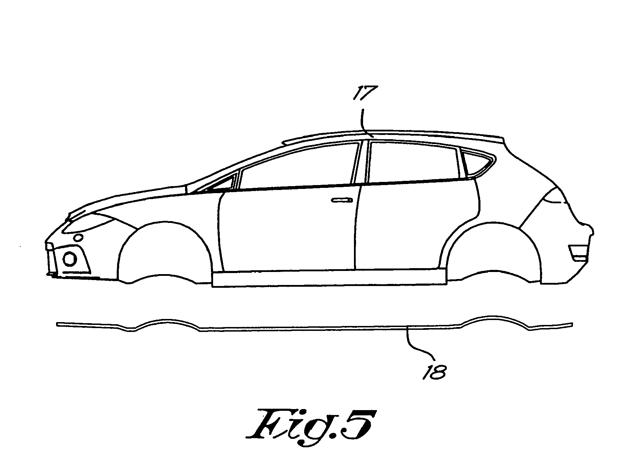

The use of this protective layer 1 on a layer of core material with the formation of a panel 7 that is thermally deformable into a component for an automobile 17 is shown in figure 5, whereby in this case the component is a floor plate 18 of an automobile.

The production of the protective layer 1 is done in one production pass and proceeds as follows.

By means of coextrusion stages, a sandwich is first formed consisting of a central non-woven glass fibre layer 7, covered above and below with a polyethylene or polypropylene layer 8,9 on which a polymer top layer 4 is laid in a subsequent coextrusion stage that is bonded onto the consolidated fibre-reinforced polymer layer 2 by means of a bonding layer 3, for example a modified polyolefin with functional groups.

The protective layer can be bonded to a core material 8 with insulated cavities on one side or both sides with the formation of a panel in a lamination step. The panel can further be finished by a thermal formation stage and by a cut to size and by applying coatings, such as a car paint, or if applicable by affixing an additional top layer consisting of a non-woven fibre layer for example, in order to obtain the specific surface properties of the panel.

The present invention is by no means limited to the embodiment described as an example and shown in the drawings, but a production method for a panel with a protective layer 1 according to the invention can be realised in all kinds of variants, without departing from the scope of the invention.

## Claims

1. A production method for the production of a panel with a protective layer **characterised in that** the panel is produced by lamination of a protective layer on a layer of core material with isolating vacancies and this on one or both sides of the core material by means of a bonding layer between the protective layer and the core material.

2. The production method according to claim 1, **characterised in that** the protective layer itself is produced in a single production pass by coextrusion of a non expanding consolidated fibre-reinforced polymer layer, with on both sides a polyethylene or polypropylene layer that is subsequently covered on one or two sides with a cover layer, that is coextruded together with a bonding layer on the polyethylene or polypropylene layer.

3. The production method according to claim 2, **characterised in that** on the cover layer of the protective layer an additional bonding layer is laminated, whereby yet another additional layer can be affixed on the protective layer.

4. The production method according to claim 2, **characterised in that** the cover layer is a polymer chosen from the groups of polyamides, polyterephthalates, polyvinyl alcohols, or polyvinyl chlorides.

5. The production method according to claim 1, **characterised in that** the thickness of the consolidated fibre-reinforced polymer layer is not more than 3 mm.

6. The production method according to claim 1, **characterised in that** the weight of the protective layer is not more than 500 g/m2.

7. The production method according to claim 2, **characterised in that** the coextruded bonding layer consists of a glycidyl-methacrylate-containing polymer.

8. The production method according to claim 2, **characterised in that** the coextruded bonding layer consists of a modified polyolefin, that has been provided with functional groups.

9. The production method according to claim 2, **characterised in that** the fibres in the coextruded reinforced polymer substrate are chosen from the groups of glass fibres, mineral fibres or vegetable fibres.

10. The production method according to claim 9, **characterised in that** the fibres in the reinforced polymer substrate are primarily oriented in the X and Y directions, parallel to the surface of the substrate.

11. The production method according to claim 1, **characterised in that** the polymer in the consolidated fibre-reinforced polymer substrate consists of polypropylene or polyethylene.

12. The production method according to claim 1, **characterised in that** the core material with insulating cavities consists of synthetic materials or natural materials.

13. The production method according to claim 12, **characterised in that** the core material consists of a synthetic foam, such as polyurethane or a honeycomb structure of synthetic materials, or a thermally expanding fibre-reinforced polymer layer.

14. The production method according to claim 13, **characterised in that** the core material consists of a natural product such as a cellulose layer or a honeycomb structure of paper or cardboard.

15. Use of a an additional layer on a protective layer described in claim 3 , as protection against chipping, water splashes, fire and external influences such as noise and UV radiation.

16. The production method according to claim 2, **characterised in that** the additional layer on the protective layer consists of a non-woven layer made of synthetic or natural materials.

17. The production method according to claim 16, **characterised in that** the non-woven layer consists of polyester, polyester/viscose mixtures, polypropylene or mixtures of polypropylene, polyester and viscose.

18. The production method according to claim 16, **characterised in that** the non-woven layer consists of cellulose fibres.

19. A thermal forming stage after the production method to produce a panel described in claim 1, , **characterised in that** the panel is thermally formed to form the component or object to be formed.
